# FASCICULE DE BREVET EUROPEEN

(11) **EP 1 779 663 B1**
(45) Date de publication et mention de la délivrance du brevet: **11.03.2009**
(21) Numéro de dépôt: 04767774.5
(22) Date de dépôt: 23.07.2004
(51) Int. Cl.: H04N 7/26

(54) **PROCEDE POUR LA REDUCTION DE LA TAILLE D'UN FICHIER NUMERIQUE IMAGE OU VIDEO**
VERFAHREN ZUR REDUKTION DER GRÖSSE EINER DIGITALEN BILD- ODER VIDEODATEI
METHOD FOR REDUCING THE SIZE OF AN IMAGE OR VIDEO DIGITAL FILE

(43) Date de publication de la demande: 02.05.2007
(73) Titulaire: I-CES, 75001 Paris (FR)
(72) Inventeur: Loiseau, Pascale, 75009 Paris (FR)
(74) Mandataire: de Saint-Palais, Arnaud Marie
(86) Numéro de dépôt international: PCT/FR2004/001985
(87) Numéro de publication internationale: WO 2006/021625

(56) Documents cités:
- GB-A- 2 238 928
- US-A- 5 488 672
- US-A- 6 075 902
- TEKALP MURAT A ED: "Digital Video Processing" DIGITAL VIDEO PROCESSING, PRENTICE HALL SIGNAL PROCESSING SERIES, UPPER SADDLE RIVER, NJ : PRENTICE HALL, US, 1995, pages 368-373, XP002265305 ISBN: 0-13-190075-7

## Description

La présente invention concerne un procédé pour la réduction de la taille d'un fichier numérique et pour la lecture du fichier ainsi réduit. Elle s'applique plus particulièrement aux fichiers numériques image ou vidéo dont les données numériques sont compressées ou non compressées ou doivent être éventuellement compressées après réduction.

D'une façon générale, on sait qu'il a déjà été proposé de nombreux procédés de traitement d'images numériques. Ainsi, par exemple, le document GB-A-2 238 928 se base sur le fait que quand une donnée image est réduite par un procédé de compression classique, il est impossible de réaliser ensuite des traitements tels qu'une correction gamma sur des pixels individuels, Ce document propose donc un traitement consistant à prendre en considération une fenêtre de pixels entourant le pixel considéré, ce qui conduit à aboutir à une valeur traitée possédant un plus grand nombre de bits.

La présente invention propose au contraire de réduire l'échelle des valeurs numériques transmises au codeur par exemple jusqu'à 1/5° de l'échelle d'origine représenté par ses 51 plus basses valeurs de luminosité.

Dans ce cas au décodage, ces 51 valeurs de luminosité réduite sont rétablies sur une échelle élargie dont les valeurs découpées de 5 en 5, sont étalonnées de 3 à 253, n'induisant qu'une erreur moyenne de 1% par rapport aux données d'origine,

Traditionnellement, les données numériques sont traduites par des nombres codés sur une échelle de 0 à 255. Dans le cadre d'un codage binaire à longueur fixe, le nombre le plus élevé faisant référence, chaque caractère est codé sur huit bits. Dans le cadre d'un codage binaire à longueur variable, l'allocation de bits se réfère à la probabilité d'apparition de chaque caractère, sans tenir compte de la hauteur de ceux-ci. Cependant, l'efficacité de ce codage dépend du nombre de valeurs à coder et de la longueur totale de la chaîne de caractères à compresser.

Pour remédier à ce problème et ainsi réduire le nombre de bits utilisés, les systèmes actuels de compression enregistrent les variations qui caractérisent le pas séparant deux ou plusieurs valeurs. Si cette option tend à diminuer leur hauteur, elle étend souvent leur plage et répond imparfaitement au problème, car les variations dépendent de l'écart maximal des valeurs numériques d'origine, dont elles ne sont que la traduction,

Plus généralement, la réduction accrue de la taille d'un fichier numérique audio et vidéo impose traditionnellement de respecter quatre contraintes dont la première et la dernière sont antinomiques :
- réduire le nombre de valeurs à coder,
- réduire l'étendue de leur plage,
- réduire la longueur de la chaîne de caractères,
- conserver le plus possible d'informations pour garantir une restitution, la moins différente possible de l'original.

L'invention a plus particulièrement pour but de remédier aux problèmes posés par une optimisation accrue du taux de compression des données numériques déjà compressées ou non, sans dégradation supplémentaire perceptible de qualité.

A cet effet, elle propose un procédé tel que défini par la revendication 1.

Avantageusement,
- les valeurs de codage de luminosité réduite sont comprises dans une échelle s'étendant jusqu'à 51 ou même jusqu'à 127 pour des valeurs d'origine comprises entre 0 et 255,
- chaque valeur restituée consiste en la valeur médiane d'un groupe correspondant de valeurs d'origine,
- la modification des valeurs restituées lors de l'étape d'adjonction s'effectue en tenant compte du nombre de redondances successives contenues dans chaque groupe de valeurs restituées.

Dans le cas de la compression d'un fichier numérique relatif aux images couleur, le procédé selon l'invention comprend en outre la séparation préalable des valeurs numériques correspondant à chacune des couches de couleurs fondamentales et le traitement séparé des valeurs correspondant à ces couches, Le fait de traiter séparément les couches de couleur permet, lors de la phase de codage, d'accroître le nombre de redondances successives et donc de diminuer le nombre de valeurs différentes puis, lors de la phase d'adjonction, d'accroître le nombre de combinaisons de couleurs (par rapport aux procédés classiques).

On constate que le procédé selon l'invention établit un principe de concentration des données du fichier d'origine, dont les valeurs ne sont plus représentées que par les 51 premières valeurs numériques (de 1 à 51 ou de 0 à 50). Celles-ci sont figées sur une échelle de 1 à 51 ou de 0 à 50, remplaçant les 256 valeurs traditionnelles potentielles. Le procédé, selon l'invention réduit de 80% le nombre de valeurs à coder. Par la même, le procédé, selon l'invention, réduit également dans les mêmes proportions l'étendue de la plage des valeurs, transmises au codeur. La conjugaison de la réduction du nombre de valeurs à coder et la réduction de leur étendue traduisent de facto une réduction de la taille du fichier codé.

Ainsi, dans le cadre d'un codage binaire à longueur fixe, la valeur la plus élevée faisant référence, 51 étant la valeur la plus haute, chaque caractère est codé sur six bits, au lieu de huit bits dans le système traditionnel. L'économie de bits représente alors 25%.

Dans le cadre du codage binaire à longueur variable, l'efficacité de ce codage binaire est renforcée par le procédé qui réduit par cinq, la plage maximale des valeurs à coder : l'occurrence la moins fréquente est codé 7 bits maximum, contre 9 bits dans le cadre actuel. Enfin, le procédé selon l'invention optimise aussi le codage des variations car, réduisant par cinq l'écart potentiel entre la valeur la plus basse et la valeur la plus haute, il condense par là même la plage des variations, dont les distances varient potentiellement de -50 à 50, au lieu de -255 à 255 traditionnellement.

Par ailleurs, un avantage du procédé selon l'invention consiste en ce qu'il réduit la longueur de la chaîne de caractères : il favorise un accroissement du taux de redondances temporelles et spatiales. En ne travaillant que sur 51 valeurs, le procédé diminue le nombre de combinaisons de couleurs isolées à transmettre au codeur. A contrario, le procédé engendre la création de redondances supplémentaires. Il permet donc aux algorithmes connus de livrer des ratios de compression plus élevés, car le procédé offre un fichier dont les données numériques sont susceptibles d'une meilleure optimisation.

Un autre avantage de ce procédé consiste en ce que malgré la réduction du nombre d'informations, il n'engendre pas de dégradation perceptible de qualité supplémentaire par rapport à la qualité de la source compressée ou non compressée. En effet, le choix du procédé de ne représenter les valeurs du fichier à coder que par ses 51 premières valeurs réside dans sa capacité à ne générer qu'un coefficient erreur faible, lors de la phase de restitution des informations, fondée sur les deux critères de proximité et de complémentarité.
- proximité : la valeur restituée n'est éloignée que d'un pas de -2 à +2 par rapport à l'origine. Le coefficient moyen d'erreur est de l'ordre de 1%. Les valeurs étant proches, la perte d'informations est donc imperceptible.
- complémentarité : le procédé prévoit une modification des plages de données uniques par adjonction complémentaire de données appliquées sur les plages d'informations unies en fonction de la répétition du nombre de données identiques successives, dont le fichier transformé recèle.

Le procédé s'adapte à tout fichier numérique image et vidéo dont les données sont déjà compressées ou brutes :
- soit, il agit en tant que mécanisme de réduction accrue de la taille des données numériques optimisant les facteurs de compression des systèmes d'encodage connus. Il modifie alors la source non compressée sur laquelle le système va agir. A ce stade, le procédé se comprend comme un module de pré-traitement d'une source destinée à être encodée par des systèmes de compression dont le procédé permet à certaines fonctions d'être plus optimales.
- soit, il agit en qualité de complément de réduction de taille de fichier déjà encodé. Il modifie le fichier compressé. Il se comprend alors comme un module de post-compression et se définit comme un outil de sur-compression destiné à réduire la taille d'un fichier numérique déjà compressé.

Ce procédé prévoit un lecteur image et/ou vidéo adapté, autorisant la visualisation du fichier numérique optimisé par l'invention et permettant par application du mécanisme de restitution par complémentarité de reproduire une meilleure qualité des plages de données unies et/ou d'établir des transitions moins prononcées entre les blocs dans le cas du traitement d'une ou des images, afin de réduire les phénomènes d'artefacts et de pixelisation.

Un mode de mise en oeuvre du procédé selon l'invention sera décrit ci-après à titre d'exemple non limitatif, avec référence aux dessins annexés dans lesquels :
La figure 1 est un schéma théorique illustrant le principe du procédé selon l'invention,
La figure 2 est un tableau de valeur montrant la réduction et l'élargissement des échelles des valeurs,
La figure 3 est un schéma synoptique illustrant les étapes du procédé.

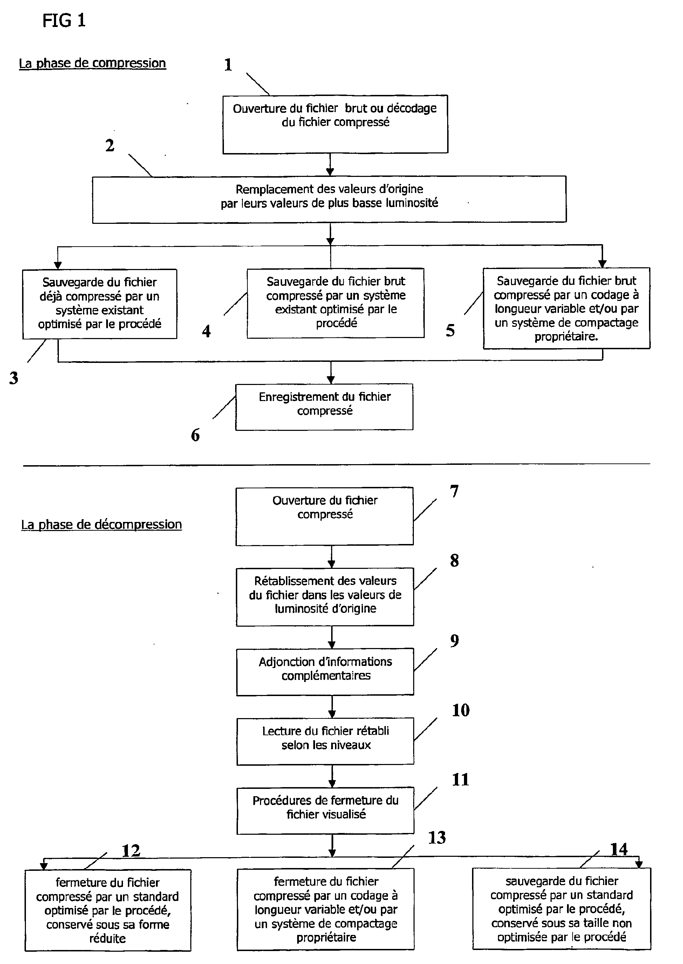

Tel qu'illustré figure 1, le procédé de traitement des valeurs des données numériques d'une source comprend successivement une phase de compression des valeurs des données numériques et une phase de décompression.
A/ La phase de compression des valeurs des données numériques comporte quatre étapes :
   1. une phase d'ouverture du fichier (bloc 1) permettant de distinguer une source non compressée ou un fichier compressé par un système de compression existant de type "Jpeg",
   2. une phase de remplacement (bloc 2) des valeurs d'origine par leurs valeurs respectives de luminosité diminuée selon une échelle de réduction pouvant être définie de 1 jusqu'à 51 ou même jusqu'à 127, selon le degré désiré de qualité,
   3. une phase de réduction de la taille du fichier traité par le procédé qui comporte trois possibilités : la réduction du fichier déjà compressé par le système de compression qui l'a déjà réduit (bloc 3) et que le procédé optimise, la réduction du fichier non compressé par un système de compression existant (bloc 4) que le procédé optimise et, la réduction du fichier non compressé par un format de compression propriétaire (bloc 5),
   4. une phase d'enregistrement du fichier compressé (bloc 6).
B/ La phase de décompression comporte cinq étapes :
   1. l'ouverture du fichier compressé par le décodeur qui sert de lecteur (bloc 7),
   2. une phase de rétablissement du fichier compressé dans ses niveaux originels de luminosité, selon les paramètres de réduction de l'échelle de luminosité utilisés lors de la phase de compression du fichier compressé ou non compressé (bloc 8),
   3. une phase d'adjonction d'informations complémentaires qui permet de doter l'image ou les images d'un nombre plus important de combinaisons de niveaux de gris ou de couleurs par couche RVB et/ou CMJN, afin de restituer le plus grand nombre possible de nuances (bloc 9),
   4. une phase de lecture du fichier décompressé et enrichi par le lecteur qui permet de visualiser l'image ou les images dans ses niveaux originels de luminosité (bloc 10),
   5. des procédures de fermeture du fichier visualisé (bloc 11) qui offrent trois possibilités : la sauvegarde sous sa taille réduite du fichier compressé par un standard de compression existant optimisé par le procédé (bloc 12), la sauvegarde du fichier sous sa taille réduite du fichier compressé par un format propriétaire (bloc 13), et l'enregistrement du fichier compressé par un standard existant de compression et rétabli dans ses niveaux originels de luminosité qui est conservé sous la taille qu'il aurait représenté s'il n'avait pas été optimisé par le procédé (bloc 14).

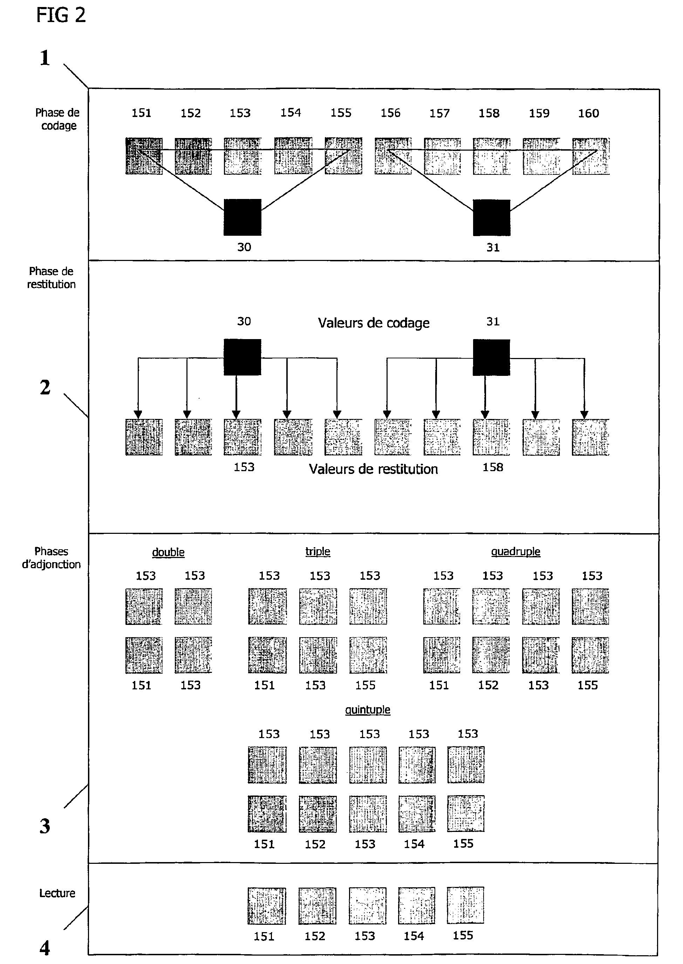

La figure 2 représente un exemple de phase de traitement des valeurs des données numériques de la source, illustrée par quatre blocs : la phase de codage (bloc 15), la phase de restitution (bloc 16), la phase d'adjonction (bloc 17), la phase de lecture (bloc 18).
a) Phase de codage : le bloc 15 illustre l'exemple d'une série de valeurs d'origine graduées de 1 en 1, représentant les nombres 151 à 160. La série se décompose en deux groupes de valeurs : 151 à 155 et 156 à 160. A chacun de ces groupes correspond sa valeur de codage prédéterminée. Le nombre 30 illustre le groupe 151 à 155 et le nombre 31 définit le groupe 156 à 160. Le bloc 15 représente un exemple de codification des valeurs 151 à 160 par leurs valeurs les plus basses correspondantes et prédéterminées 15.
b) Phase de restitution : le bloc 16 représente la phase de restitution des valeurs prédéterminées de codage des groupes 151 à 155 et 156 à 160 : 30 devient 153 et 31 devient 158. Cela représente une modification de la luminosité de la valeur restituée, phase inverse de la représentation des valeurs d'origine par leurs valeurs les plus basses correspondantes et prédéterminées. Le nombre 153 représente les valeurs 151, 152, 153, 154 et 155. Le nombre 158 représente les valeurs 156, 157, 158, 159 et 160. Les valeurs restituées sont distantes au maximum de -2 à +2 par rapport aux valeurs d'origine 16.
c) Phase d'adjonction : Le bloc 17 représente la phase d'adjonction destinée à créer des nuances de couleurs supplémentaires, en fonction du nombre de valeurs redondantes successives doubles, triples, quadruples et quintuples. Le principe d'adjonction est régi par les règles suivantes :
   - double : -2 et 0. Par exemple, 153 et 153 devient 151 et 153,
   - triple : -2, 0, +2. Par exemple, 153, 153 et 153 devient 151, 153 et 155,
   - quadruple : -2, -1, 0 et +2. Par exemple, 151, 152, 153 et 155,
   - quintuple : -2, -1, 0, +1, +2. Par exemple, un quintuple de 153 se traduit par 151, 152, 153, 154 et 155.
d) Phase de lecture : le bloc 18 représente un exemple de lecture de valeurs restituées.

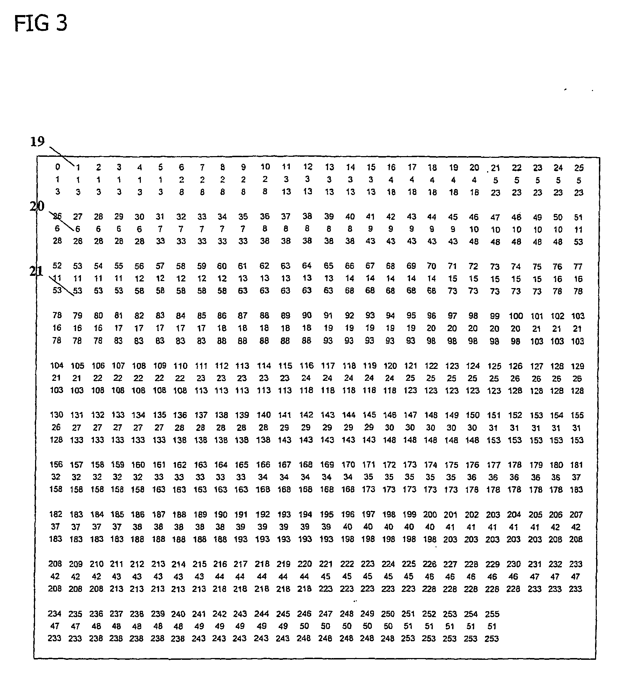

La figure 3 représente le tableau des valeurs d'origine, des valeurs de luminosité diminuée et des valeurs restituées. Le premier rang 19 des dix groupes de valeurs représente les valeurs d'origine. Le second rang 20 représente les valeurs de luminosité diminuée et le troisième rang 21 de chaque groupe de valeurs illustre les valeurs restituées dont les écarts avec la valeur d'origine ne sont jamais éloignés de plus de - 2 à + 2, représentant une erreur inférieure à 1%.

Le procédé, selon l'invention, présente l'avantage d'optimiser la compression des données des encodeurs et décodeurs logiciels ou matériels existants ou à venir. Il est adapté à tout matériel recevant déjà les données numériques compactées par les systèmes connus de compression, ou, à tout matériel s'apprêtant à diffuser des fichiers numériques image ou vidéo, selon un codage connu ou à venir.

## Revendications

1. Procédé pour la réduction d'un fichier numérique image ou vidéo dont les valeurs numériques sont codées dans leur échelle de luminosité originelle de 0 à 255 par composante de couleur, ce procédé comprenant :
- une phase de réduction de la taille du fichier comportant la décomposition des valeurs successives du fichier en des groupes originels successifs (151-155, et 156-160) de valeurs de luminosité identifiés par leur valeur médiane (153, 158) et une étape de codage dans laquelle les valeurs numériques originelles sont remplacées par des valeurs de codage de luminosité réduite (30, 31) comprises dans une seconde échelle de dimension plus réduite que celle de la première échelle et dans laquelle chaque valeur de codage représente l'ensemble des valeurs d'un groupe originel qui lui est associé,
- une étape de restitution dans laquelle chacune des valeurs de codage est remplacée par un groupe reconstitué présentant des valeurs redondantes égales à ladite valeur mediane,
- une étape d'adjonction dans laquelle on remplace des valeurs identiques successives de chaque groupe reconstitué par des valeurs correspondantes du groupe originel de manière à faire apparaître des nuances, en fonction du nombre de valeurs redondantes successives doubles, triples, quadruples et quintuples, cette adjonction s'effectuant selon les règles suivantes :
o double : -2 et 0.
o triple : -2, 0, +2.
o quadruple : -2, -1, 0 et +2.
o quintuple : -2, -1, 0, +1, +2.
- une phase de lecture des valeurs issues de l'étape d'adjonction.

2. Procédé selon la revendication 1,
**caractérisé en ce que** les valeurs de codage de luminosité réduite sont comprises dans une échelle s'étendant jusqu'à 51 ou 127 pour des valeurs d'origine comprises entre 0 et 255.

3. Procédé selon l'une des revendications précédentes,
**caractérisé en ce que** la modification des valeurs restituées lors de l'étape d'adjonction s'effectue en tenant compte du nombre de redondances successives contenues dans chaque groupe de valeurs restituées.

4. Procédé selon l'une des revendications précédentes,
**caractérisé en ce que**, dans le cas de la compression d'un fichier numérique relatif aux images couleur, il comprend en outre la séparation préalable des valeurs numériques correspondant à chacune des couches de couleurs fondamentales et le traitement séparé des valeurs correspondant à ces couches.

5. Procédé selon l'une des revendications précédentes,
**caractérisé en ce que** dans le cadre d'un codage binaire à longueur fixe, la valeur la plus élevée faisant référence, 51 ou même 127 étant la valeur la plus haute, chaque caractère est codé sur six bits ou sept bits, au lieu de huit bits dans le système traditionnel.

6. Procédé selon l'une des revendications précédentes,
**caractérisé en ce que** la valeur restituée n'est éloignée que d'un pas de +2 à -2 de la valeur d'origine.

7. Procédé selon l'une des revendications précédentes,
**caractérisé en ce que**, lors de la phase de restitution, il comprend une phase de modification des plages de données uniques par adjonction complémentaire de données appliquées sur les plages d'informations unies en fonction de la répétition du nombre de données identiques successives, dont le fichier transformé recèle.

8. Procédé selon l'une des revendications précédentes,
**caractérisé en ce que** les fichiers à traiter émanent d'une source destinée à être encodée par des systèmes de compression existants ou à venir, et **en ce que**, dans ce cas, il se comporte comme un module de prétraitement de ladite source.

## Claims

1. Method for reducing an image or video digital file whose numerical values are coded in their original brightness scale from 0 to 255 by colour component, this method comprising:
- a phase of reducing the size of the file comprising the decomposition of the successive values of the file into successive original groups (151-155 and 156-160) of brightness values identified by their median value (153, 158) and a coding step in which the original numerical values are replaced by reduced-luminosity coding values (30, 31) included in a second scale of smaller size than that of the first scale and in which each coding value represents all the values of an original group associated with it;
- a retrieval step in which each of the coding values is replaced by a reconstituted group having redundant values equal to said median value;
- an addition step in which successive identical values of each reconstituted group are replaced by corresponding values of the original group so as to reveal shades, according to the number of double, triple, quadruple and quintuple successive redundant values, this addition taking place according to the following rules:
* double: -2 and 0.
* triple: -2, 0, +2.
* quadruple: -2, -1, 0 and +2.
* quintuple: -2, -1, 0, +1, +2.
- a phase of reading the values issuing from the addition step.

2. Method according to claim 1, **characterised in that** the reduced-brightness coding values are included in a scale extending up to 51 or 127 for original values of between 0 and 255.

3. Method according to one of the preceding claims, **characterised in that**, in modifying the values retrieved during the addition step, account is taken of the number of successive redundancies contained in each group of retrieved values.

4. Method according to one of the preceding claims, **characterised in that**, in the case of the compression of a digital file relating to the colour images, it also comprises the prior separation of the numerical values corresponding to each of the layers of primary colours and the separate processing of the values corresponding to these layers.

5. Method according to one of the preceding claims, **characterised in that**, in the context of a fixed-length binary coding, the highest value making reference, 51 or even 127 being the highest value, each character is coded in six bits or seven bits instead of eight bits in the traditional system.

6. Method according to one of the preceding claims, **characterised in that** the retrieved value is distant by only one step of +2 to -2 from the original value.

7. Method according to one of the preceding claims, **characterised in that**, during the retrieval phase, it comprises a phase of modifying the unique data ranges by the complementary addition of data applied to the unique information ranges according to the repetition of the number of successive identical data that the transformed file contains.

8. Method according to one of the preceding claims, **characterised in that** the files to be processed emanate from a source intended to be encoded by existing or future compression systems, and **in that**, in this case, it behaves as a preprocessing module for said source.

## Patentansprüche

1. Verfahren zur Reduzierung einer Nummerndatei, eines Bildes oder Videos, bei welchen in ihrer ursprünglichen Helligkeitsstufe von 0 bis 255 nach Farbkomponenten und Verfahrensweise codiert wird, und zwar folgendes umfassend:
- eine Reduzierungsetappe der Dateigröße, die die Zersetzung der aufeinander folgenden Werte der Datei in aufeinander folgende ursprüngliche Gruppen von Helligkeitswerten, die durch ihren Mittelwert (153, 158) identifiziert werden und eine Codierungsetappe, in welcher die ursprünglichen digitalen Werte durch reduzierte Helligkeitscodierungswerte (30, 31) ausgetauscht werden, die in einer zweiten Abmessungsskala enthalten sind, die geringer als jene der ersten Skala sind und in welcher jeder Codierungswert die Gesamtheit der Werte von einer ursprünglichen Gruppe darstellt, die ihr zugeordnet sind,
- eine Restitutionsetappe, in welcher jeder der Codierungswerte durch eine rekonstituierte Gruppe ersetzt wird, die die gleichen redundanten Werte aufweist wie der besagte Mittelwert.
- eine Zugabeetappe, in welcher man die aufeinander folgenden identischen Werte jeder rekonstituierten Gruppe durch die entsprechenden Werte der ursprünglichen Gruppe austauscht, um somit Abstufungen zum Vorschein zu bringen in Funktion der Zahl von aufeinander folgenden doppelten, dreifachen, vierfachen und fünffachen redundanten Werten, wobei diese Zugabe nach den folgenden Regeln erfolgt:
o doppelt: -2 und 0,
o dreifach: -2, 0, +2,
o vierfach: -2, -1, 0 und +2,
o fünffach: -2, -1, 0, +1, +2.
- eine Etappe der Lesung der aus der Zugabeetappe hervorgegangenen Werte.

2. Verfahren nach Anspruch 1, **gekennzeichnet dadurch, dass** die reduzierten Helligkeitscodierungswerte von einem Massstab von 51 bis 127 für die Ursprungswerte zwischen 0 und 255 reichen.

3. Verfahren nach einem der vorangehenden Ansprüche, **gekennzeichnet dadurch, dass** die Änderung der restituierten Werte der Zugabeetappe unter Berücksichtigung der Zahl von aufeinander folgenden Redundanzen in jeder Gruppe von restituierten Werten ausgeführt wird.

4. Verfahren nach einem der vorangehenden Ansprüche, **gekennzeichnet dadurch, dass** bei der Kompression einer Nummerndatei in Bezug auf die Bilder, Farbe, dieses außerdem die vorherige Trennung der digitalen Werte umfasst, die den grundsätzlichen Farbschichten und der getrennten Behandlung der dieser Schichten entsprechenden Werte entspricht.

5. Verfahren nach einem der vorangehenden Ansprüche, **gekennzeichnet dadurch, dass** im Rahmen von einer binären Codierung mit fester Länge der höchste Wert, auf den verwiesen wird, 51 oder selbst 127 der höchste Wert ist, jedes Schriftzeichen auf sechs Bits oder sieben Bits codiert ist, anstatt von acht Bits im traditionellen System.

6. Verfahren nach einem der vorangehenden Ansprüche, **gekennzeichnet dadurch, dass** der restituierte Wert nur einen Schritt von +2 bis -2 vom Ursprungswert entfernt liegt.

7. Verfahren nach einem der vorangehenden Ansprüche, **gekennzeichnet dadurch, dass** dieses bei der Restitutionsetappe eine Änderungsphase der einzigen Datenbereiche umfasst, durch komplementäre Zugabe von Daten, die auf die damit verbundenen Informationsbereiche angewandt werden in Funktion der Wiederholung der Zahl von aufeinander folgenden identischen Daten, wobei sich die umgewandelte Datei verbirgt.

8. Verfahren nach einem der vorangehenden Ansprüche, **gekennzeichnet dadurch, dass** die zu behandelnden Dateien aus einer Quelle hervortreten, die dazu bestimmt ist, um durch bereits existierende oder noch kommende Kompressionssysteme codiert zu werden, und **dadurch**, dass es sich in diesem Fall wie ein Vorbehandlungsmodul von besagter Quelle verhält.
